# EUROPÄISCHE PATENTSCHRIFT

(11) **EP 0 734 532 B1**
(45) Veröffentlichungstag und Bekanntmachung des Hinweises auf die Patenterteilung: **07.04.1999**
(21) Anmeldenummer: 95902054.6
(22) Anmeldetag: 07.12.1994
(51) Int. Cl.: G01P 1/02

(54) **DREHRATENSENSOR**
ROTATION SPEED SENSOR
CAPTEUR DE VITESSE DE ROTATION

(30) Priorität: 17.12.1993 DE 4343135
(43) Veröffentlichungstag der Anmeldung: 02.10.1996
(73) Patentinhaber: ROBERT BOSCH GMBH, 70442 Stuttgart (DE)
(72) Erfinder: KAISER, Harry, D-71706 Markgroeningen (DE); WILLIG, Rainer, D-71732 Tamm (DE)
(86) Internationale Anmeldenummer: DE9401455
(87) Internationale Veröffentlichungsnummer: WO9516921

(56) Entgegenhaltungen:
- EP-A- 0 540 071
- WO-A-86/00144
- DE-U- 9 111 106
- GB-A- 2 061 502

## Beschreibung

### Stand der Technik

Die Erfindung geht aus von einem Drehratensensor nach der Gattung des unabhängigen Patentanspruchs. Bei bisher in der Praxis verwendeten Drehratensensoren ist in einem Gehäuse ein Meßelement zur Erfassung der Bewegung eines Fahrzeugs und eine auf einer Leiterplatte angeordnete elektrische Schaltung vorhanden. Die elektrischen Bauteile der Schaltung sind mit Hilfe von Leitungen mit dem Meßelement verbunden. Aufgrund der verwendeten Bauteile ist der Drehratensensor relativ groß und voluminös. Dadurch ist er zum Beispiel bei Kraftfahrzeugen nur schwer einbaubar.

WO-A-86 00 144 offenbart einen Drehratensensor, in welchem ein Meßelement und eine elektrische Schaltung mit einer flexiblen Leiterplatte verbunden sind.

### Vorteile der Erfindung

Der erfindungsgemäße Drehratensensor mit den kennzeichnenden Merkmalen des unabhängigen Patentanspruchs hat demgegenüber den Vorteil, daß eine sehr flache Bauweise möglich ist. Ferner sind die Bauteile sehr kompakt und platzsparend im Gehäuse des Drehratensensors angeordnet. Mit Hilfe der flexiblen Leiterplatte als Verbindung zwischen der Hybridschaltung und dem Meßelement sind die elektrischen Teile einfach und kompakt verbindbar. Es ist hierzu nur noch ein einziges Element, die flexible Leiterplatte, notwendig, im Gegensatz zu bisher mehreren unterschiedlichen Leitungen. Die Ausnehmung in der flexiblen Leiterplatte ermöglicht eine gute Biegung und somit Elastizität, ohne daß hierbei die Leiterplatte zerstört wird. Ferner wird dadurch auch eine bessere Schwingungsentkopplung zwischen dem Meßelement und der Hybridschaltung erreicht. Die vom Meßelement zu erfassenden Schwingungen werden durch die flexible Leiterplatte nur noch in sehr geringem Umfang auf die Hybridschaltung übertragen. Die sehr kompakte Anordnung eines Temperatursensors direkt am Ende der flexiblen Leiterplatte am Meßelement ermöglicht eine einfache und genaue Kalibrierungsmöglichkeit durch Abweichungen infolge von Temperaturschwankungen. Die somit durch die Verlustwärme der Bauteile der Hybridschaltung hervorgerufenen Temperaturschwankungen können somit rechtzeitig wieder kompensiert werden. Die Verwendung der flexiblen Leiterplatte ermöglicht gleichzeitig auch die Abschirmung der darauf angeordneten Leitungen durch ein auf der den Leiterbahnen abgewandten Seite befindliches Abschirmgitter (Masseabschirmung). Durch die Verwendung der flexiblen Leiterplatte ist es auch möglich, zwischen den signalführenden Leiterbahnen jeweils eine Massebahn anzuordnen, so daß die signalführenden Leiterbahnen untereinander abgeschirmt sind. Die am Stecker ausgebildete Lasche ermöglicht einen codierten Einbau und kann gleichzeitig zum Aufbringen von Herstellerdaten verwendet werden.

Durch die in den abhängigen Patentansprüchen aufgeführten Maßnahmen sind vorteilhafte Weiterbildungen und Verbesserungen der im unabhängigen Patentanspruch angegebenen Merkmale möglich.

### Zeichnung

Ein Ausführungsbeispiel der Erfindung ist in der Zeichnung dargestellt und in der nachfolgenden Beschreibung näher erläutert.

Es zeigen Figur 1 einen Längsschnitt durch einen Drehratensensor, Figur 2 einen Blick in das Innere des Drehratensensors bei geöffnetem Deckel und Figur 3 eine perspektivische Darstellung des zusammengebauten Drehratensensors.

### Beschreibung des Ausführungsbeispiels

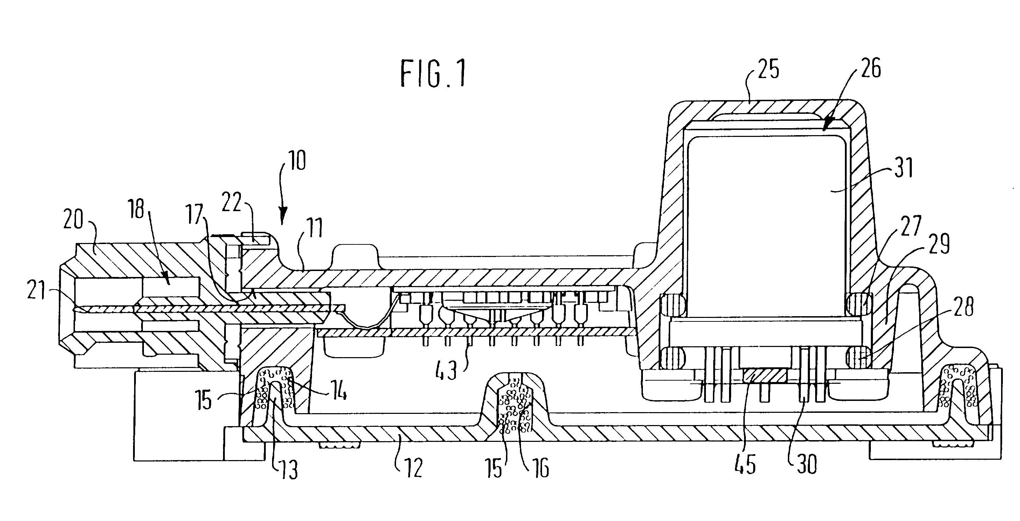

In der Figur 1 ist mit 10 das Gehäuse eines Drehratensensors bezeichnet, das aus einem Oberteil 11 und einem Deckel 12 besteht. Der Deckel 12 weist einen umlaufenden Rand 13 auf, der in eine umlaufende Nut 14 im Oberteil 11 eingesetzt und dort mit Hilfe einer Vergußmasse 15 ausgegossen befestigt ist. Mit Hilfe einer im Deckel 12 ausgebildeten Öffnung 16 kann beim Zusammenbau Luft aus dem Gehäuse 10 entweichen. Diese Öffnung 16 kann anschließend mit der Vergußmasse 15 verschlossen werden.

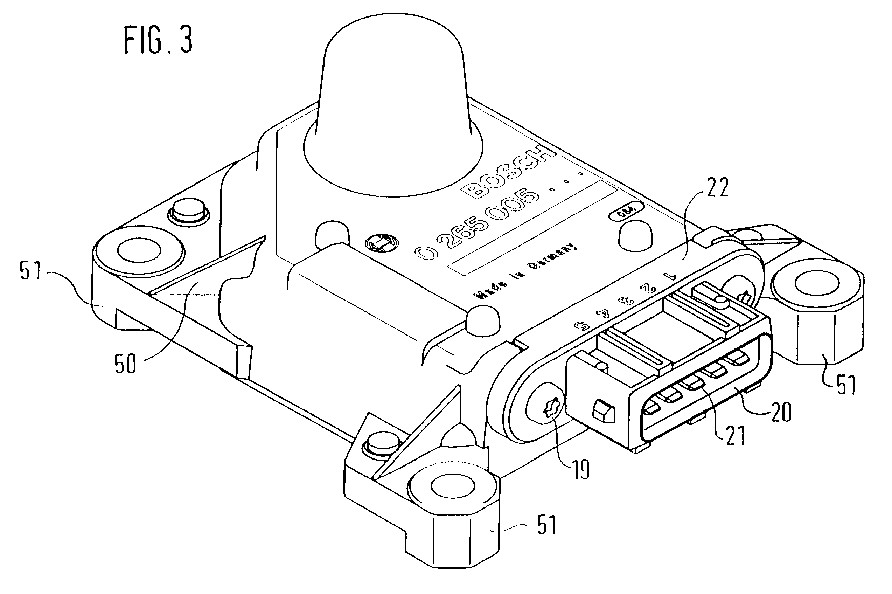

Das Oberteil 11 weist eine seitliche Öffnung 17 auf, in die eine Steckerleiste 18 abgedichtet eingesetzt ist und mit Hilfe von Schrauben 19 befestigt ist. Diese Steckerleiste 18 weist einen kragenförmigen Aufnahmeschacht 20 auf, in den mehrere Steckerelemente 21 eingesetzt sind. An der Oberseite des Aufnahmeschachts 20 ist ein flanschartiger Fortsatz 22 ausgebildet, der über das Oberteil 11 ragt. Mit Hilfe dieses Fortsatzes 22 ist eine Codierung der Steckerleiste 18 möglich, um ein falsches Einsetzen der Steckerleiste 18 in die Öffnung 17 zu verhindern. Ferner können auf dem Fortsatz 22, wie aus der Figur 3 ersichtlich ist, technische Daten, wie zum Beispiel das Fertigungsdatum etc., aufgedruckt werden.

Das Oberteil 11 des Gehäuses 10 hat ferner eine becherförmige Ausbuchtung 25 in der ein Meßelement 26 angeordnet ist. Das Meßelement 26 ist mit Hilfe zweier O-Ringe 27, 28 in einem in das Innere des Oberteils 11 ragenden Rand 29 gelagert. In die Ausbuchtung 25 können nach verschiedenen Meßprinzipien arbeitende Meßelemente 26 eingesetzt werden, so daß diese in der Zeichnung nicht genauer dargestellt sind. Ein mit Piezoelementen arbeitendes Meßelement sei im folgenden als Beispiel erläutert. Dieses Meßelement besteht aus einem aus hochlegiertem Werkzeugstahl hergestellten Metallbecher, der in die Ausbuchtung 25 hineinragt und im Bereich des Bodens von O-Ringen 27, 28 umgeben ist. Am oberen Ende des Bechers, d.h. im Bereich der Öffnung, sind acht kleine Flächen angefast, so daß acht kleine schwingfähige Systeme entstehen. Auf diesen Flächen wird jeweils ein Piezoelement aufgelötet. Der Boden des Bechers wird mit einer Glasdurchführung verschweißt. Die Piezoelemente werden mit Hilfe eines angelöteten Drahtes mit den Pins 30, die in der Zeichnung sichtbar sind, der Glasdurchführung elektrisch verbunden. Über den Metallbecher wird noch ein Topf 31 unter Vakuum auf die Glasdurchführung geschweißt. Durch eine an die Piezoelemente angelegte Spannung wird der Becher von vier Piezoelementen, die jeweils um 90 Grad zueinander versetzt sind, zum Schwingen angeregt. Dadurch schwingt der Becher mit der Resonanzfrequenz weiter. Unter 45 Grad zu den anregenden Piezoelementen bilden sich nun Schwingungsknoten aus. Wird der schwingende Becher von einer zum Beispiel durch ein schleuderndes Fahrzeug hervorgerufenen Drehbewegung überlagert, so verschieben sich aufgrund der Corioliskraft die Schwingungsknoten. Die übrigen vier Piezoelemente, die als Sensorelemente dienen, sind unter 45 Grad zu den vier anregenden Piezoelementen angeordnet. Diese vier Sensor-Piezoelemente sensieren bei sich verschiebenden Schwingungsknoten ein Meßsignal. Mit Hilfe dieses Signals werden in einer elektrischen Schaltung die vier anregenden Piezoelemente so angesteuert, daß die Schwingungknoten wieder über den Sensor-Piezoelementen zum Stehen kommen. Dieses Rückstellelement für die Schwingungsknoten entspricht der durch das oben erwähnte schleudernde Fahrzeug hervorgerufenen Drehrate (Kompensationsprinzip).

Neben dem Meßelement 26, d.h. außerhalb des Rahmens 29 ist am Boden des Oberteils 11 eine elektrische Schaltung, zum Beispiel eine Hybridschaltung, zur Auswertung des vom Meßelement 26 erzeugten Meßsignals angeordnet. Die elektrischen Bauteile der Schaltung 35 sind mit Hilfe einer Bondverbindung 34 mit den Steckerelementen 21 elektrisch verbunden.

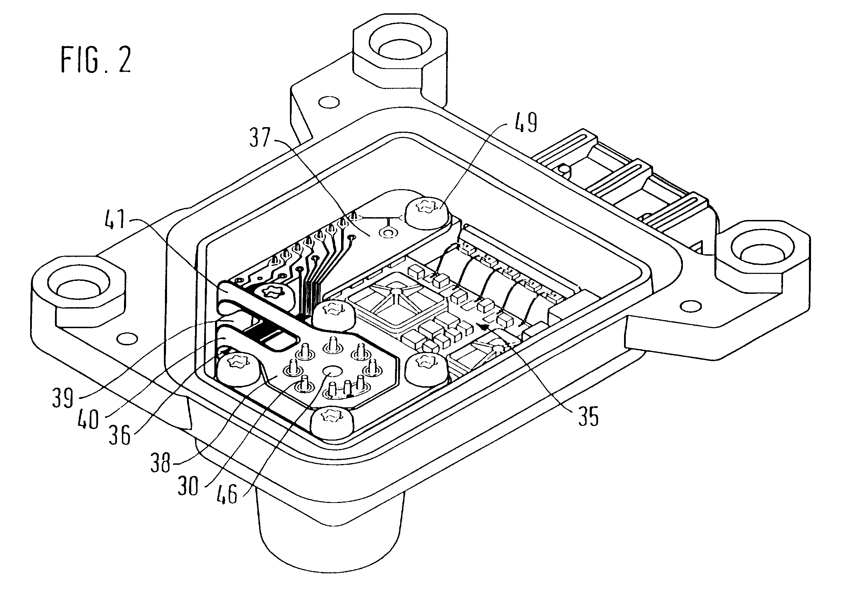

Das Meßelement 26 und die Schaltung 35 sind mit Hilfe einer flexiblen Leiterplatte 36 verbunden. Die Leiterplatte 36 weist hierzu einen in etwa parallel zur Schaltung 35 und zum Meßelement 26 verlaufenden Abschnitt 37 auf. Im Bereich des Meßelements 26 wird die Leiterplatte 36 unter einem Winkel von ca. 90 Grad umgebogen und dieser Bereich 38 wird somit nahezu senkrecht zum Bereich 37 zum Meßelement 26 geführt. Um eine einfache Biegung der Leiterplatte 36 zu ermöglichen, ist im Biegebereich eine Ausnehmung 39 vorhanden. Aufgrund der Ausnehmung 39 hat die Leiterplatte 36 im Biegebereich zwei Stege 40, 41. Der Bereich 38 der Leiterplatte 36 weist mehrere Bohrungen auf, die mit den aus dem Meßelement 26 ragenden Pins 30 korrespondieren. Dadurch wird die Leiterplatte 36 in einfacher Weise auf die Pins 30 des Meßelements 26 aufgesetzt. Wie ferner aus der Figur 2 zu ersehen ist, ist die Anordnung der Pins 30 uneinheitlich, so daß eine Codierung entsteht. Dadurch wird der Bereich 38 der Leiterplatte 36 immer richtig auf die Pins 30 des Meßelements aufgesetzt und somit ein elektrischer Kontakt hergestellt. In gleicher Weise wird der Bereich 37 mit Hilfe von dort ausgebildeten Bohrungen auf die Pins 43 der Schaltung 35 aufgesetzt und somit mit dieser elektrisch verbunden.

Zur besseren Temperaturkompensation ist zwischen dem Meßelement 26 und der flexiblen Leiterplatte 36 ein Temperatursensor 45 angeordnet. Dieser Temperatursensor 45 sitzt in einer im Bereich 38 der Leiterplatte 36 ausgebildeten Bohrung 46. Dieser Temperatursensor 45 ist zur Kalibrierung der Meßkurve der Schaltung 35 infolge von Abweichungen der Meßwerte durch Temperaturschwankungen notwendig. Bekanntlich erzeugen die elektrischen Bauteile der Schaltung eine Verlustwärme, so daß während des Einsatzes bzw. des Betriebs des Drehratensensors die Temperatur im Gehäuse 10 schwanken kann. Diese Schwankungen werden mit Hilfe des Temperatursensors 45 optimalerweise im Bereich des Meßelements 26 erfaßt und in der Schaltung 35 mitausgewertet.

Die flexible Leiterplatte 36 ermöglicht nicht nur eine kompakte Bauweise des Drehratensensors, sondern es ist, zum Beispiel wie aus der Figur 2 ersichtlich, möglich, die Signalleitungen jeweils durch eine Masseleitung zu unterbrechen. Die Leiterplatte 36 selbst ist, wie aus der Figur 2 ersichtlich, mit Hilfe von Schrauben 49 am Boden des Oberteils 11 fixiert. Auf der den Signalleitungen abgewandten Seite der Leiterplatte 36 ist ein als Masseabschirmung dienendes Abschirmgitter aufgebracht.

Das Gehäuse 10 des Drehratensensors besitzt, wie aus der Figur 3 ersichtlich ist, drei mit Rippen 50 versehene Befestigungsaugen 51, um das Gehäuse statisch bestimmt im Fahrzeug mit Hilfe von Schrauben befestigen zu können.

## Patentansprüche

1. Drehratensensor mit einem Gehäuse (10, 11, 12) in dem ein Meßelement (26) zur Erfassung der Bewegung eines zu überwachenden Fahrzeugs und eine elektrische Schaltung (35) zur Auswertung der Meßsignale des Meßelements (26) angeordnet sind, und einem am Gehäuse (10, 11, 12) befindlichen Stecker (18), mit dessen Hilfe die Schaltung (35) mit Bauteilen elektrisch verbindbar ist, dadurch gekennzeichnet, daß das Meßelement (26) mit der Schaltung (35) mit Hilfe einer flexiblen, einen Biegebereich aufweisenden Leiterplatte (36) verbunden ist und daß in diesem Biegebereich eine Ausnehmung (39) vorhanden ist.

2. Drehratensensor nach anspruch 1, dadurch gekennzeichnet, daß die flexible Leiterplatte (36) eine Ausnehmung (39) und zwei parallel dazu verlaufende Stege (40, 41) aufweist.

3. Drehratensensor nach Anspruch 1 oder 2, dadurch gekennzeichnet, daß auf der flexiblen Leiterplatte (36) im Bereich des Meßelements (26) ein Temperatursensor (45) angeordnet ist.

4. Drehratensensor nach einem der Ansprüche 1 bis 3, dadurch gekennzeichnet, daß sich zwischen den signalführenden Leiterbahnen jeweils eine Massebahn befindet.

5. Drehratensensor nach einem der Ansprüche 1 bis 4, dadurch gekennzeichnet, daß sich auf der den Leiterbahnen abgewandten Seite der Leiterplatte (36) ein als Masseabschirmung dienendes Abschirmgitter befindet.

6. Drehratensensor nach einem der Ansprüche 1 bis 5, dadurch gekennzeichnet, daß die Schaltung (35) eine Hybridschaltung ist.

7. Drehratensensor nach einem der Ansprüche 1 bis 6, dadurch gekennzeichnet, daß das Meßelement (26) einen Becher aufweist, an dessen oberem Ende mehrere Piezoelemente zur Anregung von Schwingungen und zur Ermittlung eines Meßsignals angeordnet sind.

8. Drehratensensor nach einem der Ansprüche 1 bis 7, dadurch gekennzeichnet, daß der Stecker (18) auf einer Seite einen flanschartigen Fortsatz (22) aufweist.

## Claims

1. Rate of rotation sensor having a housing (10, 11, 12) in which a measuring element (26) for recording the movement of a vehicle to be monitored and an electrical circuit (35) for evaluating the measurement signals of the measuring element (26) are disposed, and a plug (18) which is situated at the housing (10, 11, 12) and with the aid of which the circuit (35) is electrically connectable to components, characterized in that the measuring element (26) is connected to the circuit (35) with the aid of a flexible printed circuit board (36) having a flexing region, and in that a recess (39) is present in this flexing region.

2. Rate of rotation sensor according to Claim 1, characterized in that the flexible printed circuit board (36) has a recess (39) and two webs (40, 41) extending parallel thereto.

3. Rate of rotation sensor according to Claim 1 or 2, characterized in that a temperature sensor (45) is disposed on the flexible printed circuit board (36) in the region of the measuring element (26).

4. Rate of rotation sensor according to one of Claims 1 to 3, characterized in that in each case one earth track is situated between the signal-conducting conductor tracks.

5. Rate of rotation sensor according to one of Claims 1 to 4, characterized in that a screening grid serving as earth screening is situated on that side of the printed circuit board (36) which faces away from the conductor tracks.

6. Rate of rotation sensor according to one of Claims 1 to 5, characterized in that the circuit (35) is a hybrid circuit.

7. Rate of rotation sensor according to one of Claims 1 to 6, characterized in that the measuring element (26) has a cup, at the upper end of which a plurality of piezoelectric elements for the excitation of oscillations and for the determination of a measurement signal are disposed.

8. Rate of rotation sensor according to one of Claims 1 to 7, characterized in that the plug (18) has a flange-type continuation (22) on one side.

## Revendications

1. Capteur de vitesse de rotation comprenant un boîtier (10, 11, 12) dans lequel sont disposés un élément de mesure (26), qui sert à détecter le mouvement d'un véhicule à contrôler et un circuit électrique (35) qui sert à exploiter les signaux de mesure de l'élément de mesure (26), et comprenant un connecteur (18) qui se trouve sur le boîtier (10, 11, 12), connecteur à l'aide duquel on peut relier électriquement le circuit (35) à des composants,
caractérisé en ce que
- l'élément de mesure (26) est relié au circuit (35) à l'aide d'une carte à circuit imprimé flexible (36), qui présente une zone de flexion, et
- il y a dans cette zone de flexion un évidement (39).

2. Capteur de vitesse de rotation selon la revendication 1,
caractérisé en ce que
la carte à circuit imprimé flexible (36) présente un évidement (39) et deux entretoises (40, 41), qui s'étendent parallèlement à cela.

3. Capteur de vitesse de rotation selon la revendication 1 ou 2,
caractérisé en ce que
on dispose sur la carte à circuit imprimé flexible (36) dans la zone de l'élément de mesure (26) un capteur de température (45).

4. Capteur de vitesse de rotation selon la revendication 1 à 3,
caractérisé en ce que
une piste mise à la masse se trouve respectivement entre les pistes conductrices faisant passer les signaux.

5. Capteur de vitesse de rotation selon la revendication 1 à 4,
caractérisé en ce que
une grille de protection , qui sert de protection par mise à la masse, se trouve sur le côté de la carte à circuit imprimé (36), qui est tourné à l'opposé des pistes conductrices.

6. Capteur de vitesse de rotation selon la revendication 1 à 5,
caractérisé en ce que
le circuit (35) est un circuit hybride.

7. Capteur de vitesse de rotation selon la revendication 1 à 6,
caractérisé en ce que
l'élément de mesure (26) présente une cuvette, à l'extrémité supérieure de laquelle sont disposés plusieurs éléments piézo-électriques servant à engendrer des vibrations et à produire un signal de mesure.

8. Capteur de vitesse de rotation selon la revendication 1 à 7,
caractérisé en ce que
le connecteur (18) présente sur un côté un prolongement (22) en forme de bride.
